# EUROPEAN PATENT SPECIFICATION

(11) **EP 2 928 220 B1**
(45) Date of publication and mention of the grant of the patent: **15.05.2019**
(21) Application number: 13870196.6
(22) Date of filing: 12.09.2013
(51) Int. Cl.: H04W 4/10

(54) **METHOD, SYSTEM, BASE STATION AND CLUSTER EPC FOR ESTABLISHING GROUP CALL CONTEXT**
VERFAHREN, SYSTEM, BASISSTATION UND CLUSTER-EPC ZUR ERSTELLUNG EINES GRUPPENANRUFKONTEXTES
MÉTHODE, SYSTÈME, STATION DE BASE ET EPC EN GRAPPE POUR L'ÉTABLISSEMENT DE CONTEXTE D'APPEL DE GROUPE

(30) Priority: 04.01.2013 CN 201310001369
(43) Date of publication of application: 07.10.2015
(73) Proprietor: ZTE Corporation, Shenzhen, Guangdong 518057 (CN)
(72) Inventor: ZHOU, Guoliang, Shenzhen Guangdong 518057 (CN)
(74) Representative: HGF Limited
(86) International application number: PCT/CN2013/083419
(87) International publication number: WO 2014/106394

(56) References cited:
- WO-A1-2011/127430
- WO-A1-2012/154096
- CN-A- 101 938 847
- CN-A- 102 137 337
- CN-A- 102 547 595
- CN-A- 103 052 034
- CN-A- 103 052 038

## Description

### TECHNICAL FIELD

The present disclosure relates to a Long Term Evolution (LTE) trunked communication system, and in particular to a method, system, base station and cluster Evolved Packet Core (EPC) for establishing a group call context.

### BACKGROUND

As a dedicated mobile communication dispatching system, digital trunked communication has technical features including channel sharing, dynamic allocation and the like, which can provide multiple departments, institutions and other group users with communication services, such as commanding and dispatching. With the development of broadband mobile communication, especially the speedy development of the fourth generation mobile communication LTE technology, multiple requirements, such as broadband, video and high speed, for the digital trunked communication system are also presented. Thus, the trunked communication based on the LTE technology is the development direction of the current digital cluster system.

The main task in the trunked communications is establishing a group call session. A session establishment using the LTE technology is based on the establishment of a group call context, so the main task of the trunked communication system based on the LTE technology is establishing a group call context. Since the trunked communication is implemented in a half-duplex communication way, and the same session can access multiple pieces of User Equipment (UE), users can be divided into speaking right users and non-speaking right users; the speaking right user transfers group call service data to a network through the UE, and then a network sends the group call service data to other non-speaking right users by broadcasting. The speaking right user needs to establish a Radio Resource Control (RRC) connection with an evolved Node B (eNB), therefore, a session connection of the speaking right user will be based on an LTE protocol, and the non-speaking right user does not need to establish an RRC connection with the eNB.

At present, in the trunked communication system based on the LTE technology, there is not yet a technical solution for supporting the establishment of the group call context between the base station and a cluster network (which is composed of the speaking right users and the non-speaking right users).

CN 102137337 A (POTEVIO INST TECHNOLOGY CO LTD), 2011-07-27, discloses a method for establishing a group call in digital trunked communication system.

### SUMMARY

In view of this, the present disclosure is mainly intended to provide a method, system, base station and cluster EPC for establishing a group call context, so that the group call context can be established between the base station and the cluster network in a trunked communication system based on the LTE technology. The invention is defined by the independent claims:
A method for establishing a group call context is provided, as recited in claim 1.

A system for establishing a group call context is also provided, as recited in claim 6.

A cluster EPC is also provided, as recited in claim 9.

Abase station may be also provided, as recited in claim 12.

The present disclosure discloses a method, system, base station and cluster EPC for establishing a group call context between the base station and the cluster network; a group call context is established between speaking right UE and a first base station through the cluster EPC, wherein the first base station is the one to which the speaking right UE belongs; a group call context is established between the non-speaking right UE and the second base station through the cluster EPC, wherein the second base station is the one to which the non-speaking right UE belongs; in this way, the group call context can be established between the base stations and the cluster network.

### BRIEF DESCRIPTION OF THE DRAWINGS

Fig. 1 is a flowchart of a method for establishing a group call context between a base station and a cluster network according to the present disclosure;
Fig. 2 is a structural diagram of a system for establishing a group call context between a base station and a cluster network according to the present disclosure;
Fig. 3 is a structural diagram of a cluster EPC provided by the present disclosure; and
Fig. 4 is a structural diagram of a base station provided by the present disclosure.

### DETAILED DESCRIPTION

The technical solutions of the present disclosure are further elaborated below in combination with the accompanying drawings and specific embodiments.

The main idea of establishing a group call context between a base station and a cluster network of the present disclosure is that: a group call context is established between the cluster EPC and a first base station to which speaking right UE belongs, and a group call context is established between the cluster EPC and a second base station to which non-speaking right UE belongs, thereby implementing the establishment of the group call context between the base stations and the cluster network.

Generally, there is only one speaking right UE, so there is only one first base station to which the speaking right UE belongs, and non-speaking right UE may be among the pieces of UE to which the first base station provides service; since multiple pieces of non-speaking right UE may belong to different base stations respectively, there may be multiple second base stations.

Before the group call context is established, the speaking right UE first needs to establish an RRC connection with the first base station and the cluster EPC respectively.

The cluster EPC sends a generated group call context establishment request message to the first base station while the RRC connection is established; meanwhile, the cluster EPC sends a group call paging message to the second base station according to the generated group call context establishment request; after receiving the group call paging message, the second base station broadcasts the group call paging message in its coverage area; after receiving the group call paging message, the non-speaking right UE in the coverage area of the second base station returns a group call paging response message to the second base station; after receiving the group call paging response message for the first time, the second base station returns the group call paging response message to the cluster EPC; after receiving the group call paging response message, the cluster EPC sends the group call context establishment request message to the corresponding second base station.

After receiving the group call context establishment request message, the first base station or the second base station establishes a cluster group call service channel resource, and establishes a corresponding group call radio access bearer; and after completing the establishment of the cluster group call service channel resource, the first base station or the second base station broadcasts a group call configuration message through the cluster group call service channel resource, and returns the group call context establishment response message to the cluster EPC to complete the group call context establishment.

The specific solutions of the present disclosure are illustrated below through the specific embodiments.

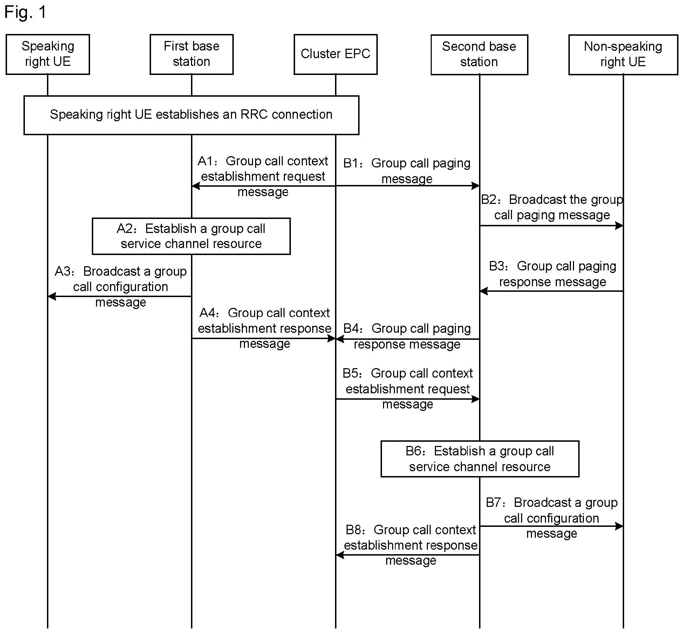

As shown in Fig. 1, the flow of establishing a group call context between the base stations and the cluster network of the present disclosure includes two parts: establishing a group call context between the cluster EPC and the first base station to which the speaking right UE belongs (including Step A1 to Step A4); establishing a group call context between the cluster EPC and the second base station to which the non-speaking right UE belongs (including Step B1 to Step B8). Before establishing the group call context, the speaking right UE needs to establish an RRC connection with the first base station and the cluster EPC respectively.

The flow of establishing a group call context between the cluster EPC and the first base station to which the speaking right UE belongs includes the following steps.

A1 includes that the speaking right UE establishes an RRC connection with the first base station and the cluster EPC, while the cluster EPC initiates the establishment of the group call context, and sends a group call context establishment request message to the first base station.

When the speaking right UE establishes the RRC connection with the first base station and the cluster EPC, the cluster EPC can learn the base station to which the speaking right UE belongs, namely the first base station.

The group call context establishment request message here is generated by the cluster EPC, and contents of the group call context includes a group call ID, a group call mode, a group call convergence maximum transmission bit rate, a group call radio access bearer list, a group call security capability, a group call security key and so on, wherein the group call ID is a serial number of a cluster call of this time, which is for uniquely identifying a certain cluster; the group call mode is the type of the cluster call of this time, which is one to one, or one to many.

The group call radio access bearer list here includes the following contents: a group call radio access bearer ID, a service quality parameter, a transport layer address, a GTP channel ID, a service bearer type, an NAS data packet and so on, wherein the group call radio access bearer ID is a serial number of a radio bearer, which is for uniquely identifying a certain radio bearer; the service bearer type is for identifying the type of a service of this time, such as data, voice, video, audio/video, and picture.

A2 includes that after receiving the group call context establishment request message, the first base station establishes a group call service channel resource, and needs to establish a corresponding group call radio access bearer according to the group call radio access bearer list. Since there are multiple types of group call services (indicated through the service bearer types), such as data, voice, video, audio/video, and picture, it is needed to establish corresponding bearers according to different service types, and the bearers corresponding to the different service types are indicated through the group call radio access bearer ID.

A3 includes that after completing the establishment of the cluster group call service channel resource, the first base station broadcasts a group call configuration message through a cluster group call service channel resource, and the speaking right UE and other non-speaking right UE of the first base station receive the group call configuration message and perform corresponding group call configuration.

A4 includes that the first base station returns a group call context establishment response message to the cluster EPC while broadcasting the group call configuration message, wherein the group call context establishment response message includes a group call ID and a list of successfully established group call radio access bearers and/or a list of unsuccessfully established group call radio access bearers. The group call ID is the same as the group call ID in the group call context establishment request message.

For the cluster group call service, the bearers corresponding to multiple service types may be established, as a result, the establishment of these bearers may be successful or failed; correspondingly, it is needed to carry the list of successfully established group call radio access bearers and/or the list of unsuccessfully established group call radio access bearers in the group call context establishment response message.

The list of successfully established group call radio access bearers includes a group call radio access bearer ID, a transport layer address and a GTP channel ID.

The list of unsuccessfully established group call radio access bearers includes a group call radio access bearer ID and a cause of failure.

The flow of establishing a group call context between the cluster EPC and the second base station to which the non-speaking right UE belongs includes the following steps.

B1 includes that the speaking right UE respectively establishes RRC connection with the first base station and the cluster EPC, while the cluster EPC sends a group call paging message to the second base station to which the non-speaking right UE belongs according to the group call ID in the group call context establishment request message. The cluster EPC can learn a corresponding cluster according to the group call ID; information of the cluster is recorded in a system where the cluster EPC is, and what is concerned in this step is information of the second base station.

B2 includes that after receiving the group call paging message, the second base station broadcasts the group call paging message in its coverage area.

B3 includes that after receiving the group call paging message, the non-speaking right UE in the coverage area of the second base station returns a group call paging response message to the second base station.

B4 includes that after receiving the group call paging response message for the first time, the second base station returns the group call paging response message to the cluster EPC.

B5 includes that the cluster EPC sends a group call context establishment request message to the second base station which returned the group call paging response message to the cluster EPC. The group call context establishment request message is the same as contents of the group call context included in the group call context establishment request message in step A1, and values of parameters in the contents of the group call context are the same.

B6 includes that after receiving the group call context establishment request message, the second base station establishes a group call service channel resource, and needs to establish a corresponding group call radio access bearer according to the group call radio access bearer list. Because there are multiple types of group call service (indicated through the service bearer type), such as data, voice, video, audio/video, and picture, it is needed to establish corresponding bearers according to different service types, and the bearers corresponding to the different service types are indicated through the group call radio access bearer ID.

B7 includes that after completing the establishment of the cluster group call service channel resource, the second base station broadcasts a group call configuration message through the cluster group call service channel resource, and the non-speaking right UE receives the group call configuration message and performs corresponding group call configuration.

B8 includes that the second base station returns a group call context establishment response message to the cluster EPC while broadcasting the group call configuration message, wherein the group call context establishment response message includes a group call ID and a list of successfully established group call radio access bearers and/or a list of unsuccessfully established group call radio access bearers.

For the cluster group call service, the bearers corresponding to multiple service types may be established, so establishment of these bearers may be successful or failed; correspondingly, it is needed to carry the list of successfully established group call radio access bearers and/or the list of unsuccessfully established group call radio access bearers in the group call context establishment response message.

The list of successfully established group call radio access bearers includes a group call radio access bearer ID, a transport layer address and a GTP channel ID.

The list of unsuccessfully established group call radio access bearers includes a group call radio access bearer ID and a cause of failure.

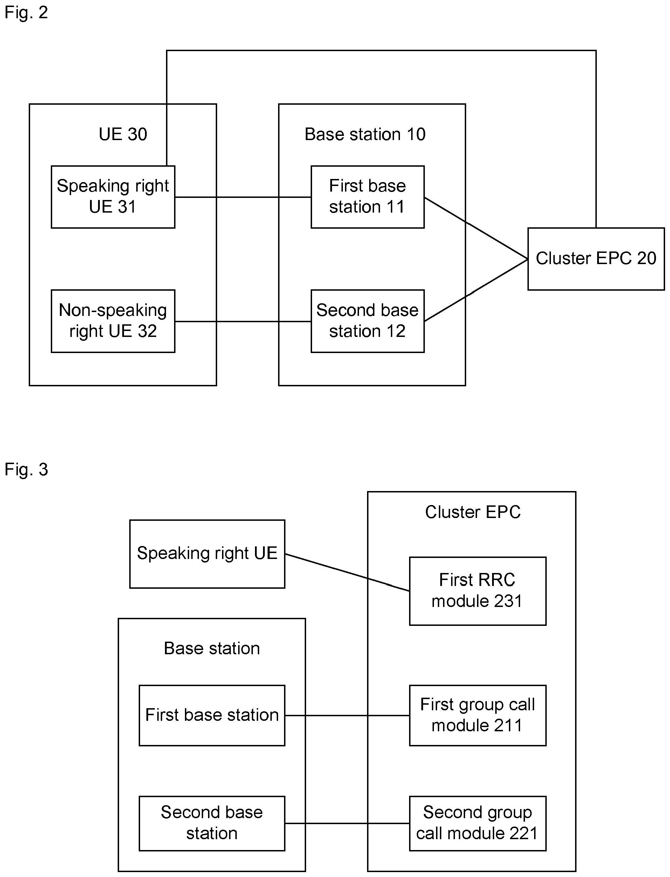

For implementing the above method, the present disclosure also provides a system for establishing a group call context between the base station and the cluster network; as shown in Fig. 2, the system includes the base station 10 and the cluster EPC 20, wherein,
the base station 10 includes the first base station 11 and the second base station 12; the first base station 11 is the one to which speaking right UE belongs, and the second base station 12 is the one to which non-speaking right UE belongs;
the cluster EPC 20 is configured to establish a group call context with the first base station 11; the cluster EPC 20 is further configured to establish a group call context with the second base station 12.

The system may further include the UE 30; the UE includes the speaking right UE 31 and the non-speaking right UE 32; wherein, the speaking right UE 31 is configured to establish an RRC connection with the first base station 11 and the cluster EPC 20 respectively.

The cluster EPC 20 is further configured to send a generated group call context establishment request message to the first base station 11 while the RRC connection is established.

The cluster EPC 20 is further configured to send a group call paging message to the second base station 12 according to the generated group call context establishment request while the RRC connection is established;
the second base station 12 is further configured to broadcast the group call paging message in its coverage area after receiving the group call paging message;
the non-speaking right UE 32 is further configured to return the group call paging response message to the second base station 12 after receiving the group call paging message;
the second base station 12 is further configured to return the group call paging response message to the cluster EPC 20 after receiving the first group call paging response message; and
the cluster EPC 20 is further configured to send the group call context establishment request message to the second base station 12 after receiving the group call paging response message.

The first base station 11 or the second base station 12 is further configured to, after receiving the group call context establishment request message, establish a cluster group call service channel resource, and establish a corresponding group call radio access bearer; the first base station or the second base station is further configured to, after completing the establishment of the cluster group call service channel resource, broadcast a group call configuration message through the cluster group call service channel resource, and return a group call context establishment response message to the cluster EPC 20 to complete the group call context establishment.

By the above way, the present disclosure implements the establishment of the group call context between the base station and the cluster network.

The present disclosure also provides a cluster EPC, which is configured to establish a group call context with the base station; as shown in Fig. 3, the cluster EPC includes a first group call module 211 and a second group call module 221, wherein,
the first group call module 211 is configured to establish a group call context with the first base station to which speaking right UE belongs; and
the second group call module 221 is configured to establish a group call context with the second base station to which non-speaking right UE belongs.

The cluster EPC may further include a first RRC module 231, which is configured to establish an RRC connection with the speaking right UE.

The first group call module 211 is further configured to send a generated group call context establishment request message to the first base station while the RRC connection is established.

The second group call module 221 is further configured to send a group call paging message to the second base station according to the generated group call context establishment request while the RRC connection is established, and send the generated group call context establishment request message to the second base station after receiving the group call paging response message returned by the second base station.

The first group call module 211 or the second group call module 221 is further configured to receive a group call context establishment response message returned by the first base station or the second base station.

In addition, all of the first group call module 211, the second group call module 221 and the first RRC module 231 may be implemented by a Central Processing Unit (CPU), a Micro Processing Unit (MPU), a Digital Signal Processor (DSP) or a Field-Programmable Gate Array (FPGA) in the cluster EPC and hardware with a communication function.

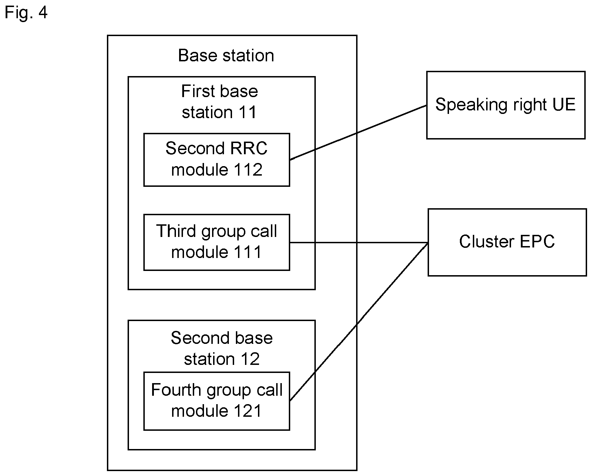

The present disclosure also provides a base station; as shown in Fig. 4, the base station includes a first base station 11 to which speaking right UE belongs and a second base station 12 to which non-speaking right UE belongs;
the first base station 11 includes a third group call module 111, which is configured to establish a group call context with the cluster EPC;
the second base station 12 includes a fourth group call module 121, which is configured to establish a group call context with the cluster EPC.

The first base station 11 further includes a second RRC module 112, which is configured to establish an RRC connection with the speaking right UE.

The third group call module 111 is further configured to receive the group call context establishment request message sent by the cluster EPC while the RRC connection is established.

The fourth group call module 121 is further configured to receive the group call paging message sent by the cluster EPC while the RRC connection is established, broadcast the group call paging message in the coverage area of the second base station 12 after receiving the group call paging message, and send the group call paging response message to the cluster EPC after receiving the group call paging response message returned by the non-speaking right UE; the fourth group call module 121 is further configured to send the group call context establishment request message after the cluster EPC receives the group call paging response message.

The third group call module 111 or the fourth group call module 121 is further configured to, after receiving the group call context establishment request message sent by the cluster EPC, establish the cluster group call service channel resource, and establish the corresponding group call radio access bearer; the third group call module 111 or the fourth group call module 121 is further configured to, after completing the establishment of the cluster group call service channel resource, broadcast the group call configuration message through the cluster group call service channel resource, and return the group call context establishment response message to the cluster EPC.

In addition, both the third group call module 111 and the second RRC module 112 may be implemented by CPU, MPU, DSP or FPGA in the first base station 11 and hardware with a communication function.

The fourth group call module 121 may be implemented by CPU, MPU, DSP or FPGA in the second base station 12 and hardware with a communication function.

The above are only the preferred embodiments of the present disclosure and not intended to limit the scope of the claims of the present disclosure.

## Claims

1. A method for establishing a group call context, comprising:
establishing a group call context between a cluster Evolved Packet Core, EPC, and a first base station to which speaking right User Equipment, UE, belongs;
establishing a group call context between the cluster EPC and a second base station to which non-speaking right UE belongs;
before establishing the group call context between the cluster EPC and the second base station to which the non-speaking right UE belongs, the method further comprising:
sending (B1), by the cluster EPC, a group call paging message to the second base station according to a generated group call context establishment request while the RRC connection is established;
after the second base station receives the group call paging message, broadcasting (B2), by the second base station, the group call paging message in a coverage area of the second base station;
**characterized in that**,
after the non-speaking right UE in the coverage area of the second base station receives the group call paging message, returning (B3), by the non-speaking right UE in the coverage area of the second base station, a group call paging response message to the second base station;
after the second base station receives the group call paging response message for the first time, returning (B4), by the second base station, the group call paging response message to the cluster EPC; and
after the cluster EPC receives the group call paging response message, sending (B5), by the cluster EPC, a group call context establishment request message to the second base station.

2. The method for establishing a group call context according to claim 1, before establishing the group call context between the cluster EPC and the first base station to which the speaking right UE belongs, the method further comprising: sending (A1), by the cluster EPC, a generated group call context establishment request message to the first base station while the RRC connection is established.

3. The method for establishing a group call context according to claim 2, wherein establishing the group call context between the cluster EPC and the first base station to which the speaking right UE belongs, or establishing the group call context between the cluster EPC and the second base station to which the non-speaking right UE belongs comprises:
after the first base station or the second base station receives the group call context establishment request message, establishing, by the first base station or the second base station, a cluster group call service channel resource, and establishing a corresponding group call radio access bearer; and
after the first base station or the second base station completes the establishment of the cluster group call service channel resource, broadcasting, by the first base station or the second base station, a group call configuration message through the cluster group call service channel resource, and returning a group call context establishment response message to the cluster EPC to complete the establishment of the group call context.

4. The method for establishing a group call context according to claim 3, wherein
the group call context establishment request message carries contents of the group call context comprising a group call Identity ,ID, a group call mode, a group call convergence maximum transmission bit rate, a group call radio access bearer list, a group call security capability and a group call security key;
the group call radio access bearer list comprises a group call radio access bearer ID, a service quality parameter, a transport layer address, a General Data Transfer Platform, GTP, channel ID, a service bearer type and a Non-Access Stratum, NAS, data packet.

5. The method for establishing a group call context according to claim 4, wherein the group call context establishment response message comprises the group call ID and a list of successfully established group call radio access bearers and/or a list of unsuccessfully established group call radio access bearers;
the list of successfully established group call radio access bearers comprises the group call radio access bearer ID, the transport layer address and the GTP channel ID; and
the list of unsuccessfully established group call radio access bearers comprises the group call radio access bearer ID and a cause of failure.

6. A system for establishing a group call context, comprising base stations, a cluster Evolved Packet Core, EPC, and User Equipment, UE, wherein,
the base stations comprise a first base station (11) and a second base station (12), wherein the first base station (11) is a base station to which speaking right UE belongs, and the second base station (12) is a base station to which non-speaking right UE belongs;
the cluster EPC (20) is configured to establish a group call context with the first base station; and the cluster EPC (20) is further configured to establish a group call context with the second base station (12); and
the UE (30) comprises the speaking right UE (31) and the non-speaking right UE (32), wherein the speaking right UE (31) is configured to establish a Radio Resource Control, RRC, connection with the first base station and the cluster EPC respectively;
wherein the cluster EPC (20) is further configured to send a group call paging message to the second base station according to a generated group call context establishment request while the RRC connection is established;
the second base station (12) is further configured to broadcast the group call paging message in a coverage area of the second base station (12) after receiving the group call paging message;
**characterized in that**,
the non-speaking right UE (31) is further configured to return a group call paging response message to the second base station (12) after receiving the group call paging message;
the second base station (12) is further configured to return the group call paging response message to the cluster EPC (20) after receiving the group call paging response message for the first time; and
the cluster EPC (20) is further configured to send a group call context establishment request message to the second base station (12) after receiving the group call paging response message.

7. The system for establishing a group call context according to claim 6, wherein the cluster EPC (20) is further configured to send a generated group call context establishment request message to the first base station while the RRC connection is established.

8. The system for establishing a group call context according to claim 7, wherein the first base station (11) or the second base station (12) is further configured to, after receiving the group call context establishment request message, establish a cluster group call service channel resource, and establish a corresponding group call radio access bearer; the first base station or the second base station is further configured to, after completing the establishment of the cluster group call service channel resource, broadcast a group call configuration message through the cluster group call service channel resource, and return a group call context establishment response message to the cluster EPC to complete establishment of the group call context.

9. A cluster Evolved Packet Core, EPC, comprising a first group call module and a second group call module, wherein,
the first group call module (211) is configured to establish a group call context with a first base station to which speaking right User Equipment, UE, belongs; and
the second group call module (221) is configured to establish a group call context with a second base station to which non-speaking right UE belongs;
**characterized in that**,
wherein the second group call module (221) is further configured to send a group call paging message to the second base station according to a generated group call context establishment request while the RRC connection is established, and send the generated group call context establishment request message to the second base station after receiving a group call paging response message returned by the second base station.

10. The cluster EPC according to claim 9, wherein the first group call module (211) is further configured to send a generated group call context establishment request message to the first base station while the RRC connection is established.

11. The cluster EPC according to claim 10, wherein the first group call module (211) or the second group call module (221) is further configured to receive a group call context establishment response message returned by the first base station or the second base station.

12. A base station, comprising a first base station (11) to which speaking right User Equipment, UE, belongs and a second base station (12) to which non-speaking right UE belongs,
wherein
the first base station (11) comprises a third group call module (111), which is configured to establish a group call context with a cluster Evolved Packet Core, EPC;
the second base station (12) comprises a fourth group call module (121), which is configured to establish a group call context with the cluster EPC;
**characterized in that**,
wherein the fourth group call module (121) is further configured to receive a group call paging message sent by the cluster EPC while the RRC connection is established, broadcast the group call paging message in a coverage area of the second base station after receiving the group call paging message, and send a group call paging response message to the cluster EPC after receiving the group call paging response message returned by the non-speaking right UE; and the fourth group call module is further configured to send a group call context establishment request message after the cluster EPC receives the group call paging response message.

13. The base station according to claim 12, wherein the first base station (11) further comprises a second Radio Resource Control, RRC, module (112), which is configured to establish an RRC connection with the speaking right UE.

14. The base station according to claim 13, wherein the third group call module (111) is further configured to receive a group call context establishment request message sent by the cluster EPC while the RRC connection is established.

15. The base station according to claim 14, wherein the third group call module (111) or the fourth group call module (121) is further configured to, after receiving the group call context establishment request message sent by the cluster EPC, establish a cluster group call service channel resource, and establish a corresponding group call radio access bearer; the third group call module or the fourth group call module is further configured to, after completing the establishment of the cluster group call service channel resource, broadcast a group call configuration message through the cluster group call service channel resource, and return a group call context establishment response message to the cluster EPC.

## Patentansprüche

1. Verfahren zur Erstellung eines Gruppenanrufkontexts, Folgendes umfassend:
Erstellen eines Gruppenanrufkontexts zwischen einem Cluster-EPC (evolved packet core) und einer ersten Basisstation, zu der ein Benutzergerät (user equipment - UE) mit Sprechrecht gehört; Erstellen eines Gruppenanrufkontexts zwischen dem Cluster-EPC und einer zweiten Basisstation, zu der ein UE ohne Sprechrecht gehört;
wobei das Verfahren vor dem Erstellen des Gruppenanrufkontexts zwischen dem Cluster-EPC und der zweiten Basisstation, zu der das UE ohne Sprechrecht gehört, ferner Folgendes umfasst:
Schicken (B1) einer Gruppenanruffunkrufnachricht an die zweite Basisstation gemäß einer erzeugten Aufforderung zur Erstellung eines Gruppenanrufkontexts durch das Cluster-EPC, während die RRC-Verbindung erstellt wird;
nachdem die zweite Basisstation die Gruppenanruffunkrufnachricht empfangen hat, Senden (B2) der Gruppenanruffunkrufnachricht durch die zweite Basisstation in einem Abdeckungsbereich der zweiten Basisstation;
**dadurch gekennzeichnet, dass**,
nachdem das UE ohne Sprechrecht in dem Abdeckungsbereich der zweiten Basisstation die Gruppenanruffunkrufnachricht empfängt, Rücksenden (B3) einer Gruppenanruffunkrufantwortnachricht an die zweite Basisstation durch das UE ohne Sprechrecht in dem Abdeckungsbereich der zweiten Basisstation;
nachdem die zweite Basisstation die Gruppenanruffunkrufantwortnachricht erstmalig empfängt, Rücksenden (B4) der Gruppenanruffunkrufantwortnachricht durch die zweite Basisstation an das Cluster-EPC; und
nachdem das Cluster-EPC die Gruppenanruffunkrufantwortnachricht empfangen hat, Schicken (B5) einer Aufforderungsnachricht zur Erstellung eines Gruppenanrufkontexts durch das Cluster-EPC an die zweite Basisstation.

2. Verfahren zur Erstellung eines Gruppenanrufkontexts nach Anspruch 1, wobei das Verfahren vor dem Erstellen des Gruppenanrufkontexts zwischen dem Cluster-EPC und der ersten Basisstation, zu der das UE mit Sprechrecht gehört, ferner Folgendes umfasst: Schicken (A1) einer erzeugten Aufforderungsnachricht zur Erstellung eines Gruppenanrufkontexts durch das Cluster-EPC an die erste Basisstation, während die RRC-Verbindung erstellt wird.

3. Verfahren zur Erstellung eines Gruppenanrufkontexts nach Anspruch 2, wobei das Erstellen des Gruppenanrufkontexts zwischen dem Cluster-EPC und der ersten Basisstation, zu der das UE mit Sprechrecht gehört, oder das Erstellen des Gruppenanrufkontexts zwischen dem Cluster-EPC und der zweiten Basisstation, zu der das UE ohne Sprechrecht gehört, Folgendes umfasst:
nachdem die erste Basisstation oder die zweite Basisstation die Aufforderungsnachricht zur Erstellung des Gruppenanrufkontexts empfangen hat, Erstellen einer Kanalressource für einen Cluster-Gruppenanrufdienst durch die erste Basisstation oder die zweite Basisstation und Erstellen eines entsprechenden Gruppenanruffunkzugriffträgers; und
nachdem die erste Basisstation oder die zweite Basisstation die Erstellung der Kanalressource für den Cluster-Gruppenanrufdienst abgeschlossen hat, Senden einer Gruppenanrufkonfigurationsnachricht durch die erste Basisstation oder die zweite Basisstation über die Kanalressource für den Cluster-Gruppenanrufdienst und Rücksenden einer Gruppenanrufkontexterstellungsantwortnachricht an das Cluster-EPC, um die Erstellung des Gruppenanrufkontexts abzuschließen.

4. Verfahren zur Erstellung eines Gruppenanrufkontexts nach Anspruch 3, wobei:
die Gruppenanrufkontexterstellungsantwortnachricht Inhalte des Gruppenanrufkontexts trägt, die eine Identität (ID) des Gruppenanrufs, einen Gruppenanrufmodus, eine maximale Übermittlungsbitrate einer Gruppenanrufzusammenführung, eine Gruppenanruffunkzugriffsträgerliste, eine Gruppenanrufsicherheitsfunktion und einen Gruppenanrufsicherheitsschlüssel umfassen;
die Gruppenanruffunkzugriffsträgerliste eine Gruppenanruffunkzugriffsträger-ID, einen Dienstqualitätsparameter, eine Transportschichtadresse, eine allgemeine Datenübertragungsplattform (general data transfer platform - GTP), eine Kanal-ID, eine Dienstträgerart und ein Datenpaket einer Nichtzugriffsebene (non-access stratum - NAS) umfasst.

5. Verfahren zur Erstellung eines Gruppenanrufkontexts nach Anspruch 4, wobei die Gruppenanrufkontexterstellungsantwortnachricht die Gruppenanruf-ID und eine Liste erfolgreich erstellter Gruppenanruffunkzugriffsträger und/oder eine Liste erfolglos erstellter Gruppenanruffunkzugriffsträger umfasst;
die Liste erfolgreich erstellter Gruppenanruffunkzugriffsträger die Gruppenanruffunkzugriffsträger-ID, die Transportschichtadresse und die GTP-Kanal-ID umfasst; und
die Liste erfolglos erstellter Gruppenanruffunkzugriffsträger die Gruppenanruffunkzugriffsträger-ID und einen Grund für das Misslingen umfasst.

6. System zur Erstellung eines Gruppenanrufkontexts, das Basisstationen, ein Cluster-EPC (evolved packet core) und ein Benutzergerät (user equipment - UE) umfasst, wobei:
die Basisstationen eine erste Basisstation (11) und eine zweite Basisstation (12) umfassen, wobei die erste Basisstation (11) eine Basisstation ist, zu der ein UE mit Sprechrecht gehört, und die zweite Basisstation (12) eine Basisstation ist, zu der ein UE ohne Sprechrecht gehört;
das Cluster-EPC (20) dazu konfiguriert ist, einen Gruppenanrufkontext mit der ersten Basisstation zu erstellen; und das Cluster-EPC (20) ferner dazu konfiguriert ist, einen Gruppenanrufkontext mit der zweiten Basisstation (12) zu erstellen; und
das UE (30) das UE (31) mit Sprechrecht und das UE (32) ohne Sprechrecht umfasst, wobei das UE (31) mit Sprechrecht dazu konfiguriert ist, mit der ersten Basisstation bzw. dem Cluster-EPC eine Funkressourcensteuerungs(radio resource control - RRC)-Verbindung zu erstellen;
wobei das Cluster-EPC (20) ferner dazu konfiguriert ist, eine Gruppenanruffunkrufnachricht gemäß einer erzeugten Aufforderung zur Erstellung eines Gruppenanrufkontexts an die zweite Basisstation zu schicken, während die RRC-Verbindung erstellt wird;
die zweite Basisstation (12) ferner dazu konfiguriert ist, die Gruppenanruffunkrufnachricht nach dem Empfangen der Gruppenanruffunkrufnachricht in einem Abdeckungsbereich der zweiten Basisstation (12) zu senden;
**dadurch gekennzeichnet, dass**
das UE (31) ohne Sprechrecht ferner dazu konfiguriert ist, eine Gruppenanruffunkrufantwortnachricht nach dem Empfangen der Gruppenanruffunkrufnachricht an die zweite Basisstation (12) zurückzusenden;
die zweite Basisstation (12) ferner dazu konfiguriert ist, die Gruppenanruffunkrufantwortnachricht nach dem erstmaligen Empfangen der Gruppenanruffunkrufantwortnachricht an das Cluster-EPC (20) zurückzusenden; und das Cluster-EPC (20) ferner dazu konfiguriert ist, eine Aufforderungsnachricht zur Erstellung eines Gruppenanrufkontexts nach dem Empfangen der Gruppenanruffunkrufantwortnachricht an die zweite Basisstation (12) zu schicken.

7. System zur Erstellung eines Gruppenanrufkontexts nach Anspruch 6, wobei das Cluster-EPC (20) ferner dazu konfiguriert ist, eine erzeugte Aufforderungsnachricht zur Erstellung eines Gruppenanrufkontexts an die erste Basisstation zu schicken, während die RRC-Verbindung erstellt wird.

8. System zur Erstellung eines Gruppenanrufkontexts nach Anspruch 7, wobei die erste Basisstation (11) oder die zweite Basisstation (12) ferner dazu konfiguriert ist, nach dem Empfangen der Aufforderungsnachricht zur Erstellung des Gruppenanrufkontexts eine Kanalressource für einen Cluster-Gruppenanrufdienst zu erstellen und einen entsprechenden Gruppenanruffunkzugriffsträger zu erstellen; die erste Basisstation oder die zweite Basisstation ferner dazu konfiguriert ist, nach dem Abschließen der Erstellung der Kanalressource für den Cluster-Gruppenanrufdienst eine Gruppenanrufkonfigurationsnachricht über die Kanalressource für den Cluster-Gruppenanrufdienst zu senden und eine Gruppenanrufkontexterstellungsantwortnachricht an das Cluster-EPC zurückzusenden, um die Erstellung des Gruppenanrufkontexts abzuschließen.

9. Cluster-EPC (evolved packet core), das ein erstes Gruppenanrufmodul und ein zweites Gruppenanrufmodul umfasst, wobei:
das erste Gruppenanrufmodul (211) dazu konfiguriert ist, einen Gruppenanrufkontext mit einer ersten Basisstation zu erstellen, zu der ein Benutzergerät (user equipment - UE) mit Sprechrecht zugehört; und
das zweite Gruppenanrufmodul (221) dazu konfiguriert ist, einen Gruppenanrufkontext mit einer zweiten Basisstation zu erstellen, zu der ein UE ohne Sprechrecht gehört;
**dadurch gekennzeichnet, dass**,
wobei das zweite Gruppenanrufmodul (221) ferner dazu konfiguriert ist, eine Gruppenanruffunkrufnachricht gemäß einer erzeugten Aufforderung zur Erstellung eines Gruppenanrufkontexts an die zweite Basisstation zu schicken, während die RRC-Verbindung erstellt wird, und die erzeugte Aufforderungsnachricht zur Erstellung des Gruppenanrufkontexts nach dem Empfangen einer Gruppenanruffunkrufantwortnachricht, die durch die zweite Basisstation zurückgesendet wird, an die zweite Basisstation zu schicken.

10. Cluster-EPC nach Anspruch 9, wobei das erste Gruppenanrufmodul (211) ferner dazu konfiguriert ist, eine erzeugte Aufforderungsnachricht zur Erstellung eines Gruppenanrufkontexts an die erste Basisstation zu schicken, während die RRC-Verbindung erstellt wird.

11. Cluster-EPC nach Anspruch 10, wobei das erste Gruppenanrufmodul (211) oder das zweite Gruppenanrufmodul (221) ferner dazu konfiguriert ist, eine Gruppenanrufkontexterstellungsantwortnachricht zu empfangen, die durch die erste Basisstation oder die zweite Basisstation zurückgesendet wird.

12. Basisstation, die eine erste Basisstation (11), zu der ein Benutzergerät (user equipment - UE) mit Sprechrecht gehört, und eine zweite Basisstation (12), zu der ein UE ohne Sprechrecht gehört, umfasst,
wobei:
die erste Basisstation (11) ein drittes Gruppenanrufmodul (111) umfasst, das dazu konfiguriert ist, einen Gruppenanrufkontext mit einem Cluster-EPC (evolved packet core) zu erstellen;
die zweite Basisstation (12) ein viertes Gruppenanrufmodul (121) umfasst, das dazu konfiguriert ist, einen Gruppenanrufkontext mit dem Cluster-EPC zu erstellen;
**dadurch gekennzeichnet, dass**,
wobei das vierte Gruppenanrufmodul (121) ferner dazu konfiguriert ist, eine Gruppenanruffunkrufnachricht, die durch das Cluster-EPC geschickt wird, zu empfangen, während die RRC-Verbindung erstellt wird, die Gruppenanruffunkrufnachricht in einem Abdeckungsbereich der zweiten Basisstation nach dem Empfangen der Gruppenanruffunkrufnachricht zu senden und eine Gruppenanruffunkrufantwortnachricht nach dem Empfangen der Gruppenanruffunkrufantwortnachricht, die durch das UE ohne Sprechrecht zurückgesendet wird, an das Cluster-EPC zu schicken; und das vierte Gruppenanrufmodul ferner dazu konfiguriert ist, eine Aufforderungsnachricht zur Erstellung eines Gruppenanrufkontexts zu schicken, nachdem das Cluster-EPC die Gruppenanruffunkrufantwortnachricht empfangen hat.

13. Basisstation nach Anspruch 12, wobei die erste Basisstation (11) ferner ein zweites Funkressourcensteuerungs(radio resource control - RRC)-Modul (112) umfasst, das dazu konfiguriert ist, eine RRC-Verbindung mit dem UE mit Sprechrecht zu erstellen.

14. Basisstation nach Anspruch 13, wobei das dritte Gruppenanrufmodul (111) ferner dazu konfiguriert ist, eine Aufforderungsnachricht zur Erstellung eines Gruppenanrufkontexts, die durch das Cluster-EPC gesendet wird, zu empfangen, während die RRC-Verbindung erstellt wird.

15. Basisstation nach Anspruch 14, wobei das dritte Gruppenanrufmodul (111) oder das vierte Gruppenanrufmodul (121) ferner dazu konfiguriert ist, nach dem Empfangen der Aufforderungsnachricht zur Erstellung des Gruppenanrufkontexts, die durch das Cluster-EPC geschickt wird, eine Kanalressource für einen Cluster-Gruppenanrufdienst zu erstellen und einen entsprechenden Gruppenanruffunkzugriffsträger zu erstellen; das dritte Gruppenanrufmodul oder das vierte Gruppenanrufmodul ferner dazu konfiguriert ist, nach dem Abschließen der Erstellung der Kanalressource für den Cluster-Gruppenanrufdienst eine Gruppenanrufkonfigurationsnachricht über die Kanalressource für den Cluster-Gruppenanrufdienst zu senden und eine Gruppenanrufkontexterstellungsantwortnachricht an das Cluster-EPC zurückzusenden.

## Revendications

1. Procédé permettant l'établissement d'un contexte d'appel de groupe, comprenant :
l'établissement d'un contexte d'appel de groupe entre un coeur de réseau évolué (EPC) en grappe et une première station de base à laquelle appartient l'équipement d'utilisateur (UE) avec droit de parole ;
l'établissement d'un contexte d'appel de groupe entre l'EPC en grappe et une seconde station de base à laquelle appartient un UE sans droit de parole ;
avant l'établissement du contexte d'appel de groupe entre l'EPC en grappe et la seconde station de base à laquelle appartient l'équipement d'utilisateur sans droit de parole, ledit procédé comprenant en outre :
l'envoi (B1), par l'EPC en grappe, d'un message de radiomessagerie d'appel de groupe à la seconde station de base selon une demande d'établissement de contexte d'appel de groupe générée pendant que la connexion RRC est établie ;
après que la seconde station de base a reçu le message de radiomessagerie d'appel de groupe, la diffusion (B2), par la seconde station de base, du message de radiomessagerie d'appel de groupe dans une zone de couverture de la seconde station de base ;
**caractérisé en ce que**,
après que l'UE sans droit de parole dans la zone de couverture de la seconde station de base a reçu le message de radiomessagerie d'appel de groupe, le renvoi (B3), par l'UE sans droit de parole dans la zone de couverture de la seconde station de base, d'un message de réponse de radiomessagerie d'appel de groupe à la seconde station de base ;
après que la seconde station de base a reçu le message de réponse de radiomessagerie d'appel de groupe pour la première fois, le renvoi (B4), par la seconde station de base, du message de réponse de radiomessagerie d'appel de groupe à l'EPC en grappe ; et
après que l'EPC en grappe a reçu le message de réponse de radiomessagerie d'appel de groupe, l'envoi (B5), par l'EPC en grappe, d'un message de demande d'établissement de contexte d'appel de groupe à la seconde station de base.

2. Procédé permettant l'établissement d'un contexte d'appel de groupe selon la revendication 1, avant l'établissement du contexte d'appel de groupe entre l'EPC en grappe et la première station de base à laquelle appartient l'UE avec droit de parole, ledit procédé comprenant en outre : l'envoi (A1), par l'EPC en grappe, d'un message de demande d'établissement de contexte d'appel de groupe généré à la première station de base pendant que la connexion RRC est établie.

3. Procédé permettant l'établissement d'un contexte d'appel de groupe selon la revendication 2, ledit établissement du contexte d'appel de groupe entre l'EPC en grappe et la première station de base à laquelle appartient l'UE avec droit de parole, ou l'établissement du contexte d'appel de groupe entre l'EPC en grappe et la seconde station de base à laquelle appartient l'UE sans droit de parole, comprenant :
après que la première station de base ou la seconde station de base a reçu le message de demande d'établissement de contexte d'appel de groupe, l'établissement, par la première station de base ou la seconde station de base, d'une ressource de canal de service d'appel de groupe en grappe, et l'établissement d'un support d'accès radio d'appel de groupe correspondant ; et
après que la première station de base ou la seconde station de base a terminé l'établissement de la ressource de canal de service d'appel de groupe en grappe, la diffusion, par la première station de base ou la seconde station de base, d'un message de configuration d'appel de groupe par l'intermédiaire de la ressource de canal de service d'appel de groupe en grappe, et le renvoi d'un message de réponse d'établissement de contexte d'appel de groupe à l'EPC en grappe pour terminer l'établissement du contexte d'appel de groupe.

4. Procédé permettant l'établissement d'un contexte d'appel de groupe selon la revendication 3,
ledit message de demande d'établissement de contexte d'appel de groupe portant les contenus du contexte d'appel de groupe comprenant une identité d'appel de groupe (ID), un mode d'appel de groupe, un débit binaire de transmission maximal de convergence d'appel de groupe, une liste de supports d'accès radio d'appel de groupe, une capacité de sécurité d'appel de groupe et une clé de sécurité d'appel de groupe ;
ladite liste de supports d'accès radio d'appel de groupe comprenant une ID de support d'accès radio d'appel de groupe, un paramètre de qualité de service, une adresse de couche transport, une ID de canal de plate-forme générale de transfert de données (GTP), un type de support de service et un paquet de données de strate de non-accès (NAS).

5. Procédé permettant l'établissement d'un contexte d'appel de groupe selon la revendication 4, ledit message de réponse d'établissement de contexte d'appel de groupe comprenant l'ID d'appel de groupe et une liste de supports d'accès radio d'appel de groupe établis avec succès et/ou une liste de supports d'accès radio d'appel de groupe établis sans succès ;
ladite liste de supports d'accès radio d'appel de groupe établis avec succès comprenant l'ID de support d'accès radio d'appel de groupe, l'adresse de couche de transport et l'ID de canal GTP ; et la liste des supports d'accès radio d'appel de groupe établis sans succès comprenant l'ID de support d'accès radio d'appel de groupe et une cause de défaillance.

6. Système destiné à établir un contexte d'appel de groupe, comprenant des stations de base, un coeur de réseau évolué (EPC) en grappe et un équipement utilisateur (UE),
lesdites stations de base comprenant une première station de base (11) et une seconde station de base (12), ladite première station de base (11) étant une station de base à laquelle appartient l'UE avec droit de parole et ladite seconde station de base (12) étant une station de base à laquelle appartient l'UE sans droit de parole ;
ledit EPC (20) en grappe étant configuré pour établir un contexte d'appel de groupe avec la première station de base ; et ledit EPC (20) en grappe étant en outre configuré pour établir un contexte d'appel de groupe avec la seconde station de base (12) ; et
ledit UE (30) comprenant l'UE avec droit de parole (31) et l'UE sans droit de parole (32), ledit UE ave droit de parole (31) étant configuré pour établir une connexion de commande de ressources radio (RRC), avec la première station de base et l'EPC en grappe respectivement ;
ledit EPC (20) en grappe étant en outre configuré pour envoyer un message de radiomessagerie d'appel de groupe à la seconde station de base selon une demande d'établissement de contexte d'appel de groupe générée pendant que la connexion RRC est établie ;
ladite seconde station de base (12) étant en outre configurée pour diffuser le message de radiomessagerie d'appel de groupe dans une zone de couverture de la seconde station de base (12) après avoir reçu le message de radiomessagerie d'appel de groupe ;
**caractérisé en ce que**,
l'UE sans droit de parole (31) est en outre configuré pour renvoyer un message de réponse de radiomessagerie d'appel de groupe à la seconde station de base (12) après avoir reçu le message de radiomessagerie d'appel de groupe ;
ladite seconde station de base (12) étant en outre configurée pour renvoyer le message de réponse de radiomessagerie d'appel de groupe à l'EPC (20) en grappe après avoir reçu le message de réponse de radiomessagerie d'appel de groupe pour la première fois ; et ledit EPC (20) en grappe étant en outre configuré pour envoyer un message de demande d'établissement de contexte d'appel de groupe à la seconde station de base (12) après avoir reçu le message de réponse de radiomessagerie d'appel de groupe.

7. Système destiné à établir un contexte d'appel de groupe selon la revendication 6, ledit EPC (20) en grappe étant en outre configuré pour envoyer un message de demande d'établissement de contexte d'appel de groupe généré à la première station de base pendant que la connexion RRC est établie.

8. Système destiné à établir un contexte d'appel de groupe selon la revendication 7, ladite première station de base (11) ou ladite seconde station de base (12) étant en outre configurée pour établir, après avoir reçu le message de demande d'établissement de contexte d'appel de groupe, une ressource de canal de service d'appel de groupe en grappe et établir un support d'accès radio d'appel de groupe correspondant ; ladite première station de base ou ladite seconde station de base étant en outre configurée pour diffuser, après avoir terminé l'établissement de la ressource de canal de service d'appel de groupe en grappe, un message de configuration d'appel de groupe par l'intermédiaire de la ressource de canal de service d'appel de groupe en grappe et renvoyer un message de réponse d'établissement de contexte d'appel de groupe à l'EPC en grappe pour terminer l'établissement du contexte d'appel de groupe.

9. Coeur de réseau évolué (EPC) en grappe comprenant un premier module d'appel de groupe et un deuxième module d'appel de groupe,
ledit premier module (211) d'appel de groupe étant configuré pour établir un contexte d'appel de groupe avec une première station de base à laquelle appartient l'équipement utilisateur (UE) avec droit de parole ; et
le deuxième module (221) d'appel de groupe étant configuré pour établir un contexte d'appel de groupe avec une seconde station de base à laquelle appartient l'UE sans droit de parole ; **caractérisé en ce que**,
ledit deuxième module (221) d'appel de groupe étant en outre configuré pour envoyer un message de radiomessagerie d'appel de groupe à la seconde station de base selon une demande d'établissement de contexte d'appel de groupe générée pendant que la connexion RRC est établie et envoyer le message de demande d'établissement de contexte d'appel de groupe généré à la seconde station de base après avoir reçu un message de réponse de radiomessagerie d'appel de groupe renvoyé par la seconde station de base.

10. EPC en grappe selon la revendication 9, ledit premier module (211) d'appel de groupe étant en outre configuré pour envoyer un message de demande d'établissement de contexte d'appel de groupe généré à la première station de base pendant que la connexion RRC est établie.

11. EPC en grappe selon la revendication 10, ledit premier module (211) d'appel de groupe ou ledit deuxième module (221) d'appel de groupe étant en outre configuré pour recevoir un message de réponse d'établissement de contexte d'appel de groupe renvoyé par la première station de base ou la seconde station de base.

12. Station de base, comprenant une première station de base (11) à laquelle appartient l'équipement utilisateur (UE) avec droit de parole et une seconde station de base (12) à laquelle appartient un UE sans droit de parole, ladite première station de base (11) comprenant un troisième module (111) d'appel de groupe, qui est configuré pour établir un contexte d'appel de groupe avec un coeur de réseau évolué (EPC) en grappe ;
ladite seconde station de base (12) comprenant un quatrième module (121) d'appel de groupe, qui est configuré pour établir un contexte d'appel de groupe avec l'EPC en grappe ;
**caractérisé en ce que**,
ledit quatrième module (121) d'appel de groupe étant en outre configuré pour recevoir un message de radiomessagerie d'appel de groupe envoyé par l'EPC en grappe pendant que la connexion RRC est établie, diffuser le message de radiomessagerie d'appel de groupe dans une zone de couverture de la seconde station de base après avoir reçu le message de radiomessagerie d'appel de groupe et envoyer un message de réponse de radiomessagerie d'appel de groupe à l'EPC en grappe après avoir reçu le message de réponse de radiomessagerie d'appel de groupe renvoyé par l'UE sans droit de parole ; et ledit quatrième module d'appel de groupe étant en outre configuré pour envoyer un message de demande d'établissement de contexte d'appel de groupe après que l'EPC en grappe a reçu le message de réponse de radiomessagerie d'appel de groupe.

13. Station de base selon la revendication 12, ladite première station de base (11) comprenant en outre un second module (112) de commande de ressources radio (RRC) qui est configuré pour établir une connexion RRC avec l'UE avec droit de parole.

14. Station de base selon la revendication 13, ledit troisième module (111) d'appel de groupe étant en outre configuré pour recevoir un message de demande d'établissement de contexte d'appel de groupe envoyé par l'EPC en grappe pendant que la connexion RRC est établie.

15. Station de base selon la revendication 14, ledit troisième module (111) d'appel de groupe ou ledit quatrième module (121) d'appel de groupe étant en outre configuré pour établir, après avoir reçu le message de demande d'établissement de contexte d'appel de groupe envoyé par l'EPC en grappe, une ressource de canal de service d'appel de groupe en grappe et établir un support d'accès radio d'appel de groupe correspondant ; ledit troisième module d'appel de groupe ou ledit quatrième module d'appel de groupe étant en outre configuré pour diffuser, après avoir terminé l'établissement de la ressource de canal de service d'appel de groupe en grappe, un message de configuration d'appel de groupe par l'intermédiaire de la ressource de canal de service d'appel de groupe en grappe et renvoyer un message de réponse d'établissement de contexte d'appel de groupe à l'EPC en grappe.
